# EUROPÄISCHE PATENTANMELDUNG

(11) **EP 2 388 478 A2**
(43) Veröffentlichungstag der Anmeldung: **23.11.2011**
(21) Anmeldenummer: 11166309.2
(22) Anmeldetag: 17.05.2011
(51) Int. Cl.: F03D 3/00, F25B 30/00

(54) **Anordnung sowie Verfahren zum Umwandeln von Strömungsenergie eines Fluids**

(30) Priorität: 19.05.2010 DE 102010029108
(71) Anmelder: Spillecke, Ralf, 47055 Duisburg (DE); Althaus, Wolfgang, 52064 Aachen (DE)
(72) Erfinder: Spillecke, Ralf, 47055 Duisburg (DE); Althaus, Wolfgang, 52064 Aachen (DE)
(74) Vertreter: Frank, Hartmut

(57) **Zusammenfassung**

Die Erfindung betrifft eine Anordnung sowie ein Verfahren zum Umwandeln von Strömungsenergie eines Fluids, insbesondere in einer Windkraftanlage, mit einer Rotoranordnung (110-410, 610), welche durch das Fluid derart antreibbar ist, dass eine durch die Rotoranordnung (110-410, 610) verrichtete mechanische Arbeit einem strömenden Wärmeträger (130-430, 630) Wärme zuführt, und einer Wärmepumpe (120-420, 620), welche einen Verdampfer (121-421, 621) zur Verdampfung eines flüssigen Kältemittels (125, 625) aufweist, wobei die Wärmepumpe (120-420, 620) derart an die Rotoranordnung (110-410, 610) gekoppelt ist, dass die Verdampfung des flüssigen Kältemittels (125) zumindest teilweise unter Ausnutzung der dem Wärmeträger (130-430, 630) zugeführten Wärme erfolgt.

## Beschreibung

Die Erfindung betrifft eine Anordnung sowie ein Verfahren zum Umwandeln von Strömungsenergie eines Fluids, insbesondere in einer Windkraftanlage.

Wenngleich die Erfindung insbesondere in einer Windkraftanlage einsetzbar ist, ist sie hierauf nicht beschränkt. Vielmehr kann es sich bei dem Fluid als Träger der erfindungsgemäß umgewandelten Strömungsenergie auch um Wasser oder um ein beliebiges anderes flüssiges oder gasförmiges Fluid handeln.

Zur Verwertung der Windkraft in einer Windkraftanlage ist es z.B. aus DE 723 048 oder DE 716 554 bekannt, die Drehkraft der Windräder in Reibungswärme unter Ausnutzung einer Flüssigkeits- oder Reibungsbremse umzuwandeln und diese Reibungswärme dann zum Verbrauchsort abzuführen.

Aufgabe der vorliegenden Erfindung ist es, eine Anordnung sowie ein Verfahren zum Umwandeln von Strömungsenergie eines Fluids bereitzustellen, welche eine besonders effektive sowie kontrollierbare Umwandlung der Strömungsenergie ermöglicht.

Diese Aufgabe wird durch die Anordnung gemäß den Merkmalen des unabhängigen Patentanspruches 1 sowie das Verfahren gemäß den Merkmalen des unabhängigen Patentanspruches 10 gelöst.

Eine erfindungsgemäße Anordnung zum Umwandeln von Strömungsenergie eines Fluids weist auf:
- eine Rotoranordnung, welche durch das Fluid derart antreibbar ist, dass eine durch die Rotoranordnung verrichtete mechanische Arbeit einem strömenden Wärmeträger Wärme zuführt; und
- eine Wärmepumpe, welche einen Verdampfer zur Verdampfung eines flüssigen Kältemittels aufweist;
- wobei die Wärmepumpe derart an die Rotoranordnung gekoppelt ist, dass die Verdampfung des flüssigen Kältemittels zumindest teilweise unter Ausnutzung der dem Wärmeträger zugeführten Wärme erfolgt.

Der Erfindung liegt insbesondere das Konzept zugrunde, die Strömungsenergie eines Fluids, also bei Anwendung in einer Windkraftanlage die in Form von Windkraft der Umgebung entnommene und als Rotationsenergie bereitgestellte Energie, quasi auf direktem Wege zur Versorgung einer Wärmepumpe mit Primärenergie zu nutzen, indem die drehende Bewegung etwa eine Windrades direkt in Wärme umgesetzt wird, welche dann unmittelbar zur Kältemittelverdampfung in einer Wärmepumpe dient. Dabei erfolgt erfindungsgemäß nicht etwa zuvor eine Umwandlung der Windkraft in elektrische Energie.

Ein weiterer wesentlicher Vorteil der Erfindung besteht darin, dass die Eigenschaften der Wärmepumpe wie im Weiteren erläutert in vorteilhafter Weise dazu genutzt werden können, die durch die Rotoranordnung bewirkte Umwandlung von Rotationsenergie in Wärme zu steuern bzw. zu regeln und damit den Wirkungsgrad zu erhöhen. Dies kann beispielsweise über eine mittels Temperaturvariation innerhalb des Wärmeträgers bzw. Arbeitsfluids erzielte Viskositätsänderung erfolgen. Hierbei kann die Temperatur des von der Wärmepumpe zur Rotoranordnung zurückströmenden Wärmeträgers über die Menge des innerhalb der Wärmepumpe zugeführten Kältemittels gesteuert werden. Dabei kann in vorteilhafter Weise eine Abkühlung des Wärmeträgers auf Seiten der Wärmepumpe gerade so eingestellt werden, dass der Wirkungsgrad von Rotoranordnung und/oder Wärmepumpe optimiert wird.

Gemäß einer Ausführungsform weist die Rotoranordnung wenigstens zwei relativ zueinander rotierende Zylinder auf, wobei der Wärmeträger sich zumindest teilweise zwischen den einander zugewandten Zylinderflächen dieser Zylinder befindet.

Gemäß einer Ausführungsform weist die Anordnung ferner ein selektiv zuschaltbares Reservoir zur Veränderung des Füllstandes des Wärmeträgers innerhalb der Rotoranordnung auf.

Gemäß einer Ausführungsform weist die Anordnung ferner eine Einrichtung zur Variation des hydrodynamischen Druckes in dem zwischen Wärmepumpe und Rotoranordnung bzw. innerhalb der Rotoranordnung strömenden Arbeitsfluid auf.

Gemäß einer Ausführungsform ist der Verdampfer in die Rotoranordnung integriert.

Gemäß einer Ausführungsform bildet das Kältemittel das zwischen Wärmepumpe und Rotoranordnung bzw. innerhalb der Rotoranordnung strömende Arbeitsfluid.

Gemäß einer Ausführungsform weist die Anordnung eine Reihen-und/oder Parallelschaltung von wenigstens zwei solcher Rotoranordnungen auf.

Gemäß einer weiteren Ausführungsform weist die Anordnung ferner einen an die Rotoranordnung gekoppelten elektrischen Generator auf.

Dabei ist vorzugsweise eine Regelung vorgesehen, mittels welcher das Verhältnis zwischen einer von diesem Generator bereitgestellten elektrischen Energie und der dem Wärmeträger durch die mechanische Arbeit der Rotoranordnung zugeführten Wärme regelbar ist. Auf diese Weise kann in Betriebsphasen, in denen keine Bereitstellung von Wärme über die Wärmepumpe (etwa für ein Heizsystem oder einen weiteren Wärmetauscher) notwendig ist, die überwiegende oder sämtliche in der Rotoranordnung anfallende Rotationsenergie in elektrischen Strom umgewandelt werden. Umgekehrt kann in Situationen, in denen ein erhöhter Bedarf nach der Bereitstellung von Wärme besteht (etwa weil eine hohe Heizleistung eines Heizsystems erforderlich ist), hauptsächlich die Zufuhr von Wärme an den strömenden Wärmeträger und damit die Bereitstellung von Wärme über die Wärmepumpe erfolgen, so dass die in der Rotoranordnung anfallende Rotationsenergie nur zu einem vergleichsweise geringen Anteil oder überhaupt nicht durch den Generator in elektrischen Strom umgewandelt wird.

Mittels der durch den elektrischen Generator bereitgestellten elektrischen Energie können z.B. die rotierenden Zylinder der Rotoranordnung abgebremst oder (etwa im Sinne einer "Starthilfe") beschleunigt werden. Insbesondere kann erforderlichenfalls (etwa wenn die Erwärmung des Wärmeträgers stärker als erwünscht ist) die Energie des elektrischen Generators gewissermaßen zur Erzeugung eines Bremswiderstandes eingesetzt werden, um zu bewirken, dass die Rotoranordnung langsamer läuft bzw. weniger Wärmeenergie bereitstellt. Dabei kann auch einer zu starken Abkühlung des Wärmeträgers durch die Wärmepumpe durch aktive Heizung mittels des Generators und umgekehrt einer zu starken Aufheizung des Wärmeträgers durch aktive Kühlung mittels des Generators entgegengewirkt werden.

Des Weiteren kann die vom elektrischen Generator bereitgestellte elektrische Energie auch zur Versorgung der Wärmepumpe oder zur Versorgung von einer oder mehreren gegebenenfalls vorhandenen (und im Weiteren noch näher erläuterten) Einrichtung(en) zur Steuerung bzw. Regelung der durch die Rotoranordnung bewirkten Umwandlung von Rotationsenergie genutzt werden, beispielsweise für den Betrieb einer Pumpe zur Einstellung des Füllstandes des Wärmeträgers innerhalb der Rotoranordnung oder einer Heizung bzw. Kühlung zur Veränderung der Viskosität des Wärmeträgers.

Ein weiterer Vorteil des Vorhandenseins eines solchen Generators ist, dass Drehmomentspitzen etwa bei auftretenden Windböen effektiv zur Umwandlung in elektrische Energie genutzt werden können, welche dann ebenfalls für die vorstehend beschriebenen Zwecke zur Verfügung steht.

Die Erfindung betrifft ferner ein Verfahren zum Umwandeln von Strömungsenergie eines Fluids, wobei das Fluid eine Rotoranordnung antreibt, wobei eine durch diese Rotoranordnung verrichtete mechanische Arbeit einem Wärmeträger Wärme zuführt, und wobei mit Wärme des Wärmeträgers ein Verdampfer einer Wärmepumpe versorgt wird.

Zu bevorzugten Ausgestaltungen und Vorteilen des Verfahrens wird auf die o.g. Ausführungen im Zusammenhang mit der erfindungsgemäßen Anordnung Bezug genommen.

Weitere Ausgestaltungen der Erfindung sind der Beschreibung sowie den Unteransprüchen zu entnehmen.

Die Erfindung wird nachstehend anhand von in den beigefügten Abbildungen dargestellten Ausführungsbeispielen näher erläutert.

Es zeigen:

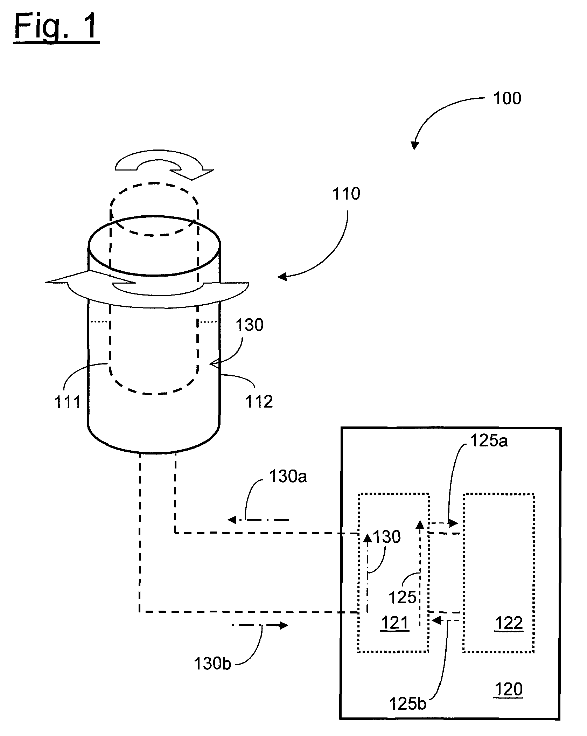

- Figur 1-6: schematische Darstellungen zur Erläuterung unterschiedlicher Ausführungsformen einer erfindungsgemäßen Anordnung.

Eine erfindungsgemäße Anordnung 100 zum Umwandeln von Strömungsenergie eines Fluids, insbesondere in einer Windkraftanlage, weist gemäß Fig. 1 zunächst eine Rotoranordnung 110 mit zwei an einem Mast der Windkraftanlage gegenläufig um eine gemeinsame Rotationsachse rotierenden Zylindern 111, 112 auf, zwischen denen sich ein Arbeitsfluid befindet, welches der Rotoranordnung 110 kontinuierlich zugeführt sowie von der Rotoranordnung 110 abgeführt wird und welches im Weiteren als Wärmeträger 130 bezeichnet wird. Als Wärmeträger 130 kann beispielsweise ein Wärmeträgeröl dienen, welches über ein (nicht dargestelltes) Pumpensystem in der Anordnung zirkuliert. Der Füllstand des Wärmeträgers 130 innerhalb des durch die rotierenden Zylinder 111, 112 gebildeten Zwischenraumes ist in Fig. 1 durch die gepunktete Linie dargestellt.

In dem Arbeitsfluid bzw. Wärmeträger 130 entsteht aufgrund der sich zwischen den einander zugewandten und gegeneinander rotierenden Zylinderflächen eine Scherströmung, welche über die entstehende Joule'sche Wärme das Arbeitsfluid aufheizt, so dass im Ergebnis die durch die Rotoranordnung 110 verrichtete mechanische Arbeit dem strömenden Wärmeträger 130 als Wärme zugeführt wird. Durch eine Rotation der Zylinder 111, 112 der Rotoranordnung 110 relativ zueinander wird somit Bewegungsenergie in Wärmeenergie in der zwischen den Zylindern befindlichen Flüssigkeit umgesetzt.

Ohne dass die Erfindung hierauf beschränkt wäre, können die relativ zueinander rotierenden Zylinder 111, 112 über Rotorblätter einer Windkraftanlage angetrieben werden, wobei die zugehörigen Rotoren übereinander sowie z.B. gegenläufig rotierbar am Mast angebracht sein können. Selbstverständlich kann anstelle einer gegenläufigen Rotation auch eine gleichläufige Rotation der beiden Zylinder oder auch eine Rotation nur eines der Zylinder (bei Festhalten des anderen Zylinders) erfolgen. Des Weiteren können z.B. am Mast einer Windkraftanlage auch zwei Anordnungen aus jeweils zwei Zylindern übereinander angeordnet sein, wobei jeweils einer dieser Zylinder feststehend sein kann. Ferner können, wie im Weiteren noch detaillierter erläutert, auch mehr als zwei Anordnungen aus Zylindern in Reihe oder parallel geschaltet sein.

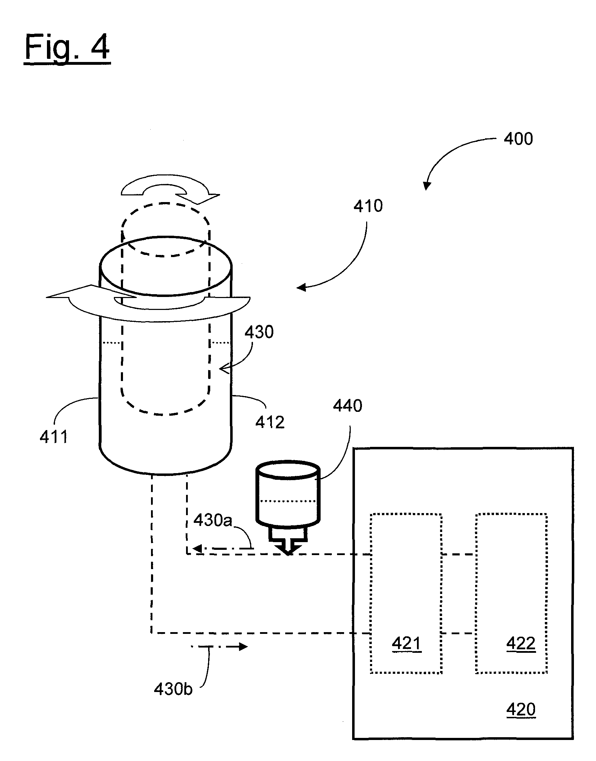

Die in der Rotoranordnung 110 anfallende Rotationsenergie wird somit zunächst auf direktem Wege zur Erwärmung des Wärmeträgers 130 genutzt. Zur Steuerung bzw. Regelung der durch die Rotoranordnung 110 bewirkten Umwandlung von Rotationsenergie in Wärme kann beispielsweise mittels des Aufbaus von Fig. 4 der Füllstand des Wärmeträgers 130 innerhalb der Rotoranordnung 110 durch selektive Zuschaltung eines Reservoirs 440 verändert werden.

Des Weiteren weist die Anordnung 100 von Fig. 1 eine Wärmepumpe 120 auf, welche einen z.B. in Form eines Plattenwärmetauschers vorhandenen Verdampfer 121 zur Verdampfung eines flüssigen Kältemittels 125 aufweist. In der Wärmepumpe 120 befindet sich ferner ein (mit entsprechenden Einspritzventilen ausgestatteter) Kompressor 122.

Die durch den Wärmeträger 130 von der Rotoranordnung 110 zur Wärmepumpe 120 transportierte Wärme wird nun auf Seiten des Verdampfers 121 der Wärmepumpe 120 dazu genutzt, das Kältemittel 125 zu verdampfen. Der Kompressor 122 verflüssigt anschließend das Kältemittel 125 unter Umwandlung von dem Kompressor 122 zugeführter elektrischer Energie und stellt die gespeicherte Wärme dann beispielsweise an einem weiteren Wärmetauscher oder einem Heizsystem zur Verfügung. Dabei ist der von der Rotoranordnung 110 zur Wärmepumpe 120 strömende Wärmeträger in Fig. 1 mit "130b" und der von der Wärmepumpe 120 zur Rotoranordnung 110 strömende Wärmeträger mit "130a" bezeichnet. Des Weiteren ist das flüssige Kältemittel in Fig. 1 mit "125b" und das gasförmige Kältemittel mit "125a" bezeichnet. Als Kältemittel kann hier wie in den weiteren Ausführungsformen ein gängiges Kältemittel wie z.B. R404a, R407 oder R410a verwendet werden.

Die infolge der Funktion der Wärmepumpe 120 eingestellte geringere Temperatur des von der Wärmepumpe 120 zur Rotoranordnung 110 strömenden Wärmeträgers 130a kann nun erfindungsgemäß dazu genutzt werden, um über die mit dieser Temperaturänderung einhergehende Viskositätsänderung des Wärmeträgers 130 (dessen Viskosität mit fallender Temperatur steigt) die Strömung innerhalb der Rotoranordnung 110 und damit unmittelbar auch die durch die Rotoranordnung 110 bewirkte Umwandlung von Rotationsenergie in Wärme zu steuern.

Dabei kann unter weiterer Ausnutzung der Eigenschaften einer Wärmepumpe 120 in vorteilhafter Weise insbesondere die Temperatur des von der Wärmepumpe 120 zur Rotoranordnung 110 zurückströmenden Wärmeträgers 130a über die Menge des innerhalb der Wärmepumpe 120 zugeführten Kältemittels 125 gesteuert werden, da mit zunehmender Kältemittelmenge die Übertragungsfläche zwischen Wärmeträger 130 und Kältemittel 125 kälter wird, solange genügend Wärme vom Wärmeträger 130 zur Verdampfung des Kältemittels transportiert wird.

Lediglich beispielhaft (und ohne dass die Erfindung hierauf beschränkt wäre) kann je nach Auslegung des Gesamtsystems die Temperatur des von der Rotoranordnung 110 zur Wärmepumpe 120 hin strömenden Wärmeträgers 130b oberhalb von z.B. 15°C (z.B. bei 15-20°C) liegen und die Temperatur des von der Wärmepumpe 120 zur Rotoranordnung 110 zurückströmenden Wärmeträgers 130a 2-5°C betragen (d.h. der Wärmeträger wird im Bereich der Rotoranordnung 110 von einer Temperatur von 2-5°C auf eine Temperatur oberhalb von z.B. 15°C erwärmt).

Zur Steuerung bzw. Regelung der durch die Rotoranordnung 410 bewirkten Umwandlung von Rotationsenergie in Wärme kann gemäß Fig. 4 beispielsweise der Füllstand des Wärmeträgers 430 innerhalb der Rotoranordnung 410 verändert werden. Hierzu kann etwa gemäß dem in Fig. 4 schematisch dargestellten Aufbau ein selektiv zuschaltbares Reservoir 440 verwendet werden.

Des Weiteren kann zur Steuerung bzw. Regelung der durch die Rotoranordnung 110 bewirkten Umwandlung von Rotationsenergie in Wärme der (innere Über-)Druck des Wärmeträgers 130 z.B. mittels einer Druckauflage verändert werden. Ferner kann auch die Viskosität des Wärmeträgers verändert werden, was insbesondere über eine Temperaturvariation möglich ist, wobei die erzielte Viskositätsänderung wiederum infolge der veränderten Strömungseigenschaften das Ausmaß der Umwandlung von Rotationsenergie in Wärme beeinflusst.

Der Verdampfer 121 bewirkt wie vorstehend beschrieben eine Verdampfung des Kältemittels 125, wobei dem Wärmeträger 130 Wärme entzogen wird, so dass sich der Wärmeträger 130 abkühlt. Über diese Abkühlung kann wiederum die Strömung innerhalb der Rotoranordnung 110 in solcher Weise beeinflusst werden, dass über eine Optimierung des Wirkungsgrades der Anordnung 100 insbesondere ein Maximum an Reibung erzielt und ein Optimum an Wärmemenge erhalten wird.

Die Leistungsbilanz der Wärmepumpe 120 (entsprechend der von der Wärmepumpe pro kW an elektrischer Leistung zur Verfügung gestellten Heizleistung) nimmt typischerweise ab, sobald die Temperatur zu weit absinkt. Die auf Seiten des Kompressors 122 aufgewendete elektrische Energie kann optimal ausgenutzt werden, indem die Temperatur des aus der Wärmepumpe 120 austretenden und zur Rotoranordnung 110 zurückgeführten Wärmeträgers 130 oberhalb eines bestimmten Wertes (z.B. oberhalb von 2° C) gehalten wird. Mit anderen Worten wird dem Wärmeträger 130 in der Wärmepumpe 120 nicht die maximal mögliche Wärmemenge entnommen, sondern es wird vielmehr dafür Sorge getragen, dass die Temperatur des Wärmeträgers 130a am Ausgang der Wärmepumpe 120 in einem Bereich bleibt, in dem einerseits die Wärmepumpe 120 optimal arbeitet und andererseits die Strömungsverhältnisse innerhalb der Rotoranordnung 110 günstig sind bzw. der Wirkungsgrad der durch die Rotoranordnung 110 erzielten Umwandlung optimiert wird.

Lediglich beispielhaft kann der durch die erfindungsgemäße Anordnung 100 realisierte Wirkungsgrad bzw. die Leistungsbilanz der Wärmepumpe 120 (d.h. der COP-Wert, COP= ,,Coefficient of Performance"= Leistungsbilanz) bei einem Wert von 4 oder sogar darüber liegen (d.h. einer aufgewendeten elektrischen Leistung von 1 kW steht eine über den Carnotprozess erzeugte Heizleistung von 4 kW gegenüber). Hierbei wird der Umstand ausgenutzt, dass der Wirkungsgrad der Wärmepumpe 120 bis zu einem gewissen Grad umso besser ist, je größer die Temperatur am Ein- bzw. Austritt der Wärmepumpe 120 ist. Insoweit erweist sich die Erfindung als besonders vorteilhaft etwa im Vergleich zu einem Wärmepumpensystem, welches die Umgebungswärme der Umgebungsluft entzieht und beispielsweise im Winter und bei Temperaturen unterhalb des Gefrierpunktes wesentlich weniger Wärme von der Umgebung bereitgestellt erhält und somit auch nur eine geringe Kältemittelmenge verdampfen kann.

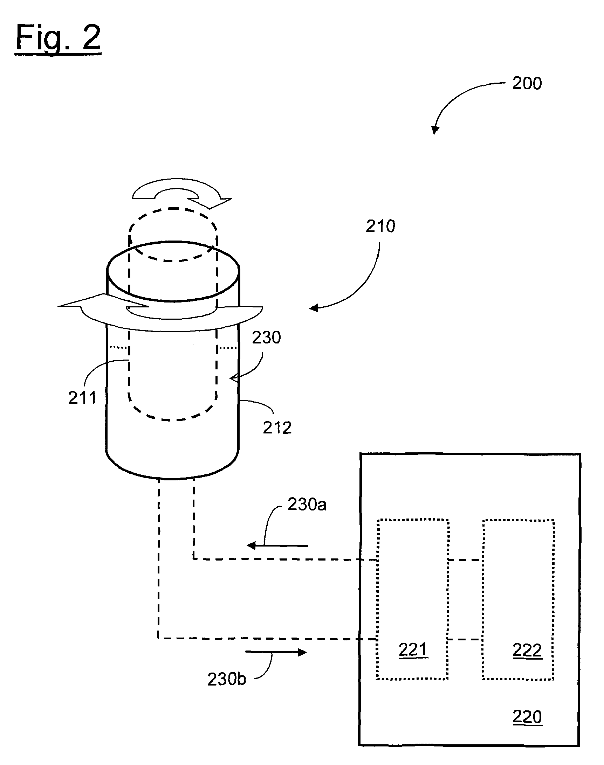

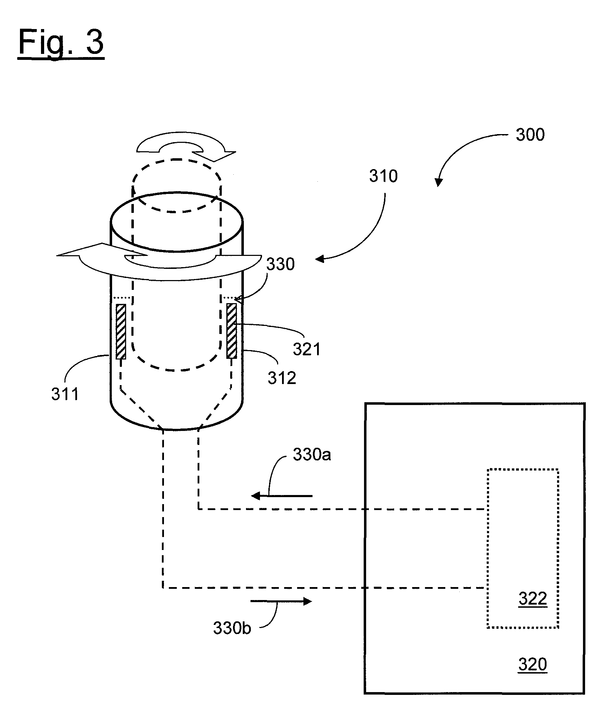

Fig. 2 und Fig. 4 dienen zur Erläuterung möglicher alternativer Ausgestaltungen der erfindungsgemäßen Anordnung, wobei zur Anordnung von Fig. 1 vergleichbare bzw. funktionsgleiche Elemente mit um 100 (in Fig. 2) bzw. um 200 (in Fig. 3) erhöhten Bezugsziffern bezeichnet sind.

Gemäß einer in Fig. 2 schematisch dargestellten Ausführungsform kann auch ein Kältemittel 230 direkt als zwischen Wärmepumpe 220 und Rotoranordnung 210 sowie innerhalb der Rotoranordnung 210 strömendes Arbeitsfluid eingesetzt werden.

Gemäß einer weiteren, in Fig. 3 schematisch dargestellten Ausführungsform kann der Verdampfer 321 auf Seiten der Rotoranordnung 310 integriert sein, so dass die Einheit 320 der Wärmepumpe 320 nur noch den Kompressor 322 und den Wärmetauscher für den Sekundärkreis enthält. Mit anderen Worten kann also die Grenzfläche des Wärmetauschers der Wärmepumpe, an welcher das Kältemittel die zur Verdampfung benötigte Wärme vom Wärmeträger erhält, auch an anderen Positionen innerhalb des Gesamtsystems angeordnet sein.

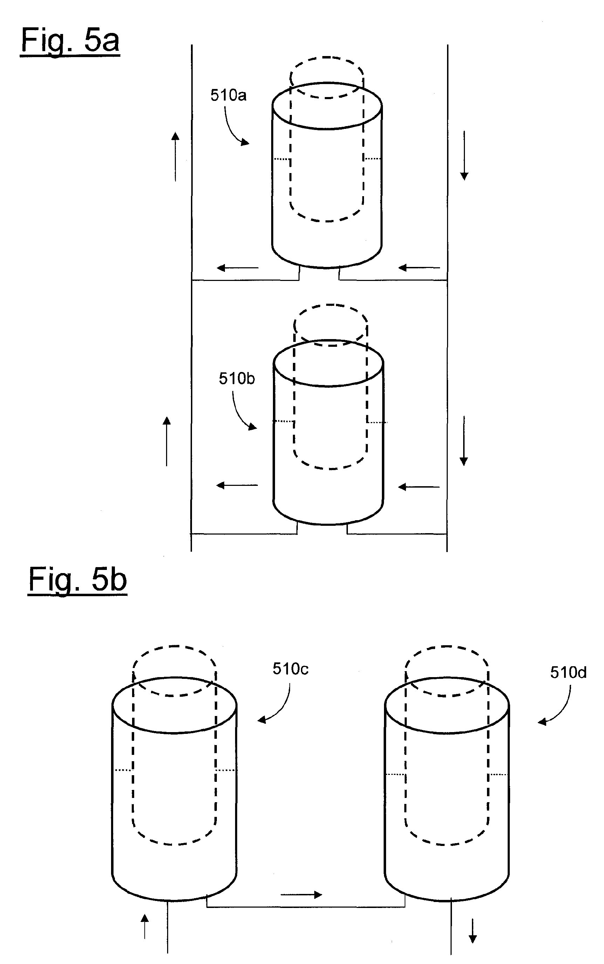

Des Weiteren können auch mehrere (d.h. wenigstens zwei, allgemein n) Rotoranordnungen der vorstehend beschriebenen Art kaskadenförmig in Reihe (vgl. Rotoranordnungen 500a, 500b, ... in Fig. 5a) oder auch parallel (vgl. Rotoranordnungen 500c, 500d, ... in Fig. 5b) geschaltet werden, um eine sukzessive Temperaturerhöhung des Wärmeträgers von einer Stufe bzw. Rotoranordnung zur nächstfolgenden Stufe bzw. Rotoranordnung und damit ggf. eine weitere Steigerung des Wirkungsgrades der gesamten Anordnung zu erzielen.

Gemäß einer weiteren (nicht dargestellten) Ausführungsform kann durch zusätzliche Ankopplung eines Stirlingmotors, welcher über mittels des Wärmeträgers erzeugten Dampf betrieben wird, die für den Kompressor benötigte elektrische Energie über die erfindungsgemäße Anordnung gleich mit erzeugt werden.

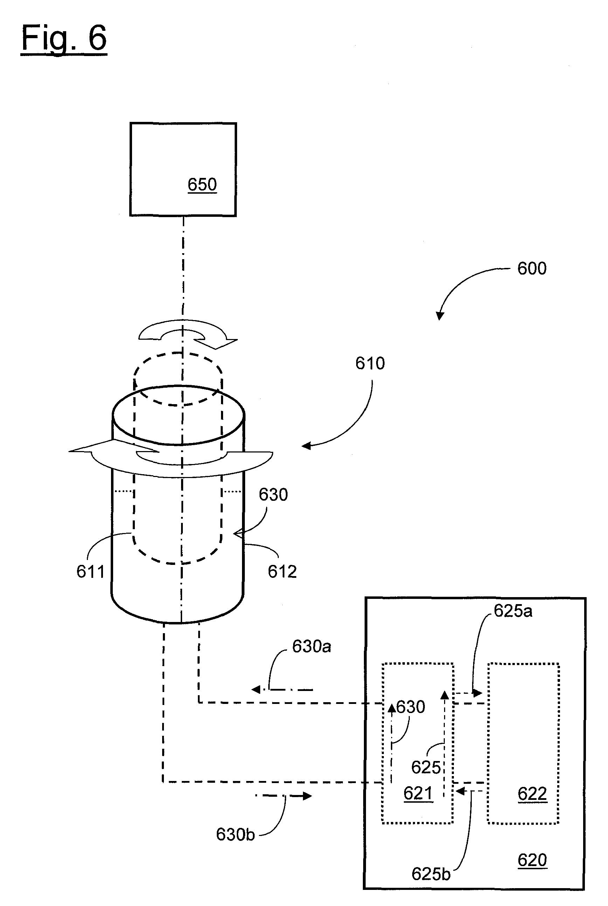

Fig. 6 dient zur Erläuterung einer weiteren Ausführungsform, wobei zur Anordnung von Fig. 1 vergleichbare bzw. funktionsgleiche Elemente mit um "500" erhöhten Bezugsziffern bezeichnet sind.

Die in Fig. 6 gezeigte Anordnung weist zusätzlich einen an die Rotoranordnung 610 gekoppelten elektrischen Generator 650 auf, welcher über die im Betrieb der Anordnung rotierenden Zylinder 611, 612 der Rotoranordnung 610 über eine Welle antreibbar und dazu in der Lage ist, die durch die Rotoranordnung 610 bereitgestellte Rotationsenergie in elektrische Energie umzuwandeln. Dabei ist vorzugsweise eine (nicht dargestellte) Regelung vorgesehen, mittels welcher das Verhältnis zwischen der vom Generator 650 bereitgestellten elektrischen Energie und der dem Wärmeträger 630 durch die mechanische Arbeit der Rotoranordnung 610 zugeführten Wärme je nach Bedarf regelbar ist. Ein solcher Generator 650 kann u.a. zur elektrischen Versorgung einer Einrichtung zur Steuerung bzw. Regelung der durch die Rotoranordnung 610 bewirkten Umwandlung von Rotationsenergie in Wärmeenergie genutzt werden, beispielsweise für den Betrieb einer in der Anordnung von Fig. 4 verwendeten Pumpe zur Veränderung des Füllstandes des Wärmeträgers bzw. Arbeitsfluids innerhalb der Rotoranordnung oder für den Betrieb einer Heizung bzw. Kühlung zur Veränderung der Viskosität des Wärmeträgers. Des Weiteren kann die Rotoranordnung 610 durch die vom elektrischen Generator bereitgestellte elektrische Energie abgebremst oder (etwa im Sinne einer "Starthilfe") beschleunigt werden.

Ein solcher elektrischer Generator ist ebenso analog in den weiteren vorstehend beschriebenen Ausführungsformen von Fig. 2-5 realisierbar.

Zusammenfassend wird durch die Erfindung eine zusätzliche, attraktive Möglichkeit bereitgestellt, eine Wärmepumpe zu betreiben, indem die durch Windkraft von der Umgebung bereitgestellte und in Form von Rotationsenergie in einer Windkraftanlage der Umgebung entnommene Energie quasi auf direktem Wege zum Antrieb einer Wärmepumpe genutzt wird.

Wenn die Erfindung auch anhand spezieller Ausführungsformen beschrieben wurde, erschließen sich für den Fachmann zahlreiche Variationen und alternative Ausführungsformen, z.B. durch Kombination und/oder Austausch von Merkmalen einzelner Ausführungsformen. Dementsprechend versteht es sich für den Fachmann, dass derartige Variationen und alternative Ausführungsformen von der vorliegenden Erfindung mit umfasst sind, und die Reichweite der Erfindung nur im Sinne der beigefügten Patentansprüche und deren Äquivalente beschränkt ist.

## Patentansprüche

1. Anordnung zum Umwandeln von Strömungsenergie eines Fluids, insbesondere in einer Windkraftanlage, mit:
● einer Rotoranordnung (110-410, 610), welche durch das Fluid derart antreibbar ist, dass eine durch die Rotoranordnung (110-410, 610) verrichtete mechanische Arbeit einem strömenden Wärmeträger (130-430, 630) Wärme zuführt; und
● einer Wärmepumpe (120-420, 620), welche einen Verdampfer (121-421, 621) zur Verdampfung eines flüssigen Kältemittels (125, 625) aufweist;
● wobei die Wärmepumpe (120) derart an die Rotoranordnung (110-410, 610) gekoppelt ist, dass die Verdampfung des flüssigen Kältemittels zumindest teilweise unter Ausnutzung der dem Wärmeträger (130-430, 630) zugeführten Wärme erfolgt.

2. Anordnung nach Anspruch 1, **dadurch gekennzeichnet, dass** die Rotoranordnung wenigstens zwei relativ zueinander rotierende Zylinder (111, 112; 211, 212; 311, 312; 411, 412; 611, 612) aufweist, wobei der Wärmeträger (130-430, 630) sich zumindest teilweise zwischen den einander zugewandten Zylinderflächen dieser Zylinder befindet.

3. Anordnung nach Anspruch 1 oder 2, **dadurch gekennzeichnet, dass** diese ferner ein selektiv zuschaltbares Reservoir (440) zur Veränderung des Füllstandes des Wärmeträgers (430) innerhalb der Rotoranordnung (410) aufweist.

4. Anordnung nach einem der vorhergehenden Ansprüche, **dadurch gekennzeichnet, dass** diese ferner eine Einrichtung zur Variation des hydrodynamischen Druckes in dem zwischen Wärmepumpe und Rotoranordnung bzw. innerhalb der Rotoranordnung strömenden Arbeitsfluid aufweist.

5. Anordnung nach einem der vorhergehenden Ansprüche, **dadurch gekennzeichnet, dass** der Verdampfer (321) in die Rotoranordnung (310) integriert ist.

6. Anordnung nach einem der vorhergehenden Ansprüche, **dadurch gekennzeichnet, dass** das Kältemittel (230) das zwischen Wärmepumpe (220) und Rotoranordnung (210) bzw. innerhalb der Rotoranordnung (210) strömende Arbeitsfluid bildet.

7. Anordnung nach einem der vorhergehenden Ansprüche, **dadurch gekennzeichnet, dass** diese eine Reihen-und/oder Parallelschaltung von wenigstens zwei solcher Rotoranordnungen (500a, 500b, 500c, 500d) aufweist.

8. Anordnung nach einem der vorhergehenden Ansprüche, **dadurch gekennzeichnet, dass** diese ferner einen an die Rotoranordnung (610) gekoppelten elektrischen Generator (650) aufweist.

9. Anordnung nach Anspruch 8, **dadurch gekennzeichnet, dass** ferner eine Regelung vorgesehen ist, mittels welcher das Verhältnis zwischen einer von diesem Generator (650) bereitgestellten elektrischen Energie und der dem Wärmeträger (630) durch die mechanische Arbeit der Rotoranordnung (610) zugeführten Wärme regelbar ist.

10. Verfahren zum Umwandeln von Strömungsenergie eines Fluids, insbesondere in einer Windkraftanlage, **dadurch gekennzeichnet, dass**
● das Fluid eine Rotoranordnung (110-410, 610) antreibt, wobei eine durch die Rotoranordnung (110-410, 610) verrichtete mechanische Arbeit einem strömenden Wärmeträger (130-430, 630) Wärme zuführt;
● wobei mit Wärme des Wärmeträgers (130-430, 630) ein Verdampfer (121-421, 621) einer Wärmepumpe (120-420, 620) derart betrieben wird, dass die Verdampfung des flüssigen Kältemittels (125, 625) zumindest teilweise unter Ausnutzung der dem Wärmeträger (130-430, 630) zugeführten Wärme erfolgt.

11. Verfahren nach Anspruch 10, **dadurch gekennzeichnet, dass** die Temperatur des von der Wärmepumpe (120-420, 620) zur Rotoranordnung (110-410, 610) zurückströmenden Wärmeträgers (130a-430a, 630a) über die Menge des innerhalb der Wärmepumpe (120-420, 620) zugeführten Kältemittels (125, 625) gesteuert wird.

12. Verfahren nach Anspruch 10 oder 11, **dadurch gekennzeichnet, dass** eine Abkühlung des Wärmeträgers auf Seiten der Wärmepumpe gerade so eingestellt wird, dass der Wirkungsgrad von Rotoranordnung (110-410, 610) und/oder Wärmepumpe (120-420, 620) optimiert wird.
